**Europäisches Patentamt**

**European Patent Office**

**Office européen des brevets**

(19)

(11) Veröffentlichungsnummer: **0 202 626 B1**

(12) **EUROPÄISCHE PATENTSCHRIFT**

(45) Veröffentlichungstag der Patentschrift: **09.10.91**

(21) Anmeldenummer: **86106702.3**

(22) Anmeldetag: **16.05.86**

Die Akte enthält technische Angaben, die nach dem Eingang der Anmeldung eingereicht wurden und die nicht in dieser Patentschrift enthalten sind.

(51) Int. Cl.⁵: **C02F 3/12, C02F 11/02, C02F 3/34**

(54) **Verfahren zur Reduzierung organischer Inhaltstoffe in Abfällen und/oder Abwässern.**

(30) Priorität: **23.05.85 DE 3518623**

(43) Veröffentlichungstag der Anmeldung:
**26.11.86 Patentblatt 86/48**

(45) Bekanntmachung des Hinweises auf die Patenterteilung:
**09.10.91 Patentblatt 91/41**

(84) Benannte Vertragsstaaten:
**BE CH DE FR GB LI LU NL SE**

(56) Entgegenhaltungen:
**EP-A- 0 038 489        EP-A- 0 125 546
CH-A- 134 956          CH-A- 427 674
DE-A- 2 640 875        DE-A- 2 952 342
DE-B- 1 584 873**

**K.IMHOFF: "Taschenbuch der Stadtentwässerung", 22. Auflage, 1969, Seiten 182,183,174,175, R. Oldenbourg Verlag, München, DE**

**COUNCIL ON ENVIRONMENTAL QUALITY AND US ENVIRONMENTAL PROTECTION AGENCY: "Evaluation of municipal sewage treatment alternatives", Contract EQC 316,**

**Februar 1974, Seiten 8,46,47, Superintendent of Documents, US Government Printing Office, Washington, US**

**GEWÄSSERSCHUTZ-WASSER-ABWASSER, Sonderdruck, März 1982, Seiten 135-153, Aachen, DE; P. DIERS et al.: "Festschrift zum 60. Geburtstag von Professor Dr.-Ing. Botho Böhnke am 22. März 1982"**

(73) Patentinhaber: **Kowa, Herbert
Blumenstrasse 2
W-6901 Mauer(DE)**

(72) Erfinder: **Kowa, Herbert
Blumenstrasse 2
W-6901 Mauer(DE)**

(74) Vertreter: **Dipl.-Phys.Dr. Manitz Dipl.-Ing., Dipl.-W.-Ing. Finsterwald Dipl.-Ing. Grämkow Dipl.-Chem.Dr. Heyn Dipl.-Phys. Rotermund Morgan, B.Sc.(Phys.) Robert-Koch-Strasse 1 W-8000 München 22(DE)**

## Beschreibung

Die Erfindung betrifft ein Verfahren zur Reduzierung organischer Inhaltsstoffe in Abfällen und/oder Abwässern, bei dem den in einen Reaktor eingebrachten Abfällen und/oder Abwässern Mikroorganismen, insbesondere spezialisierte Hochleistungsstämme, in einer von der organischen Belastung abhängigen Menge beigegeben werden, und die Abfälle und/oder Abwässer in eine wasserreiche Phase und eine wasserarme Phase getrennt werden.

Es ist üblich, Abfälle mit organischen Inhaltstoffen zu deponieren, zu verbrennen oder auf landwirtschaftliche Nutzflächen auszubringen.
Die Ausbringung derartiger Abfälle auf landwirtschaftliche Nutzflächen setzt voraus, daß diese Abfälle hygienisch einwandfrei sind und keine Schadstoffe enthalten. Diese Forderung ist gleichbedeutend damit, daß nur ein verschwindend geringer Anteil von Abfällen auf diese Weise verarbeitet werden kann.

Eine Verbrennung der Abfälle ist nicht nur aufgrund des hohen Wassergehalts im Abfall energie- und damit kostenintensiv, sondern sie verlagert das Problem der Schadstoffbeseitigung nur vom Boden auf die Luft, deren Schadstoffgehalt entsprechend erhöht wird.

Die Deponie auf Hausmüll- bzw. Sondermülldeponien scheitert zunehmend an mangelndem Deponieplatz. Außerdem entstehen bei der Lagerung von Schlämmen auf Deponien Sickerwässer und damit hochbelastete Abwässer, die eine aufwendige Abwasserbehandlung erforderlich machen.

Es ist auch bereits bekannt, zur Abwasseraufbereitung Mikroorganismen einzusetzen, um die Wasserqualität im Ablauf zu verbessern, Geruchsbelästigungen und Fettablagerungen zu verringern, Schaum im Belebtschlammbecken zu beseitigen und dergleichen.

Bei den bekannten Abwasserbehandlungsanlagen, und zwar auch bei den mit Einsatz von Mikroorganismen arbeitenden Abwasserbehandlungsanlagen fallen in dem belüfteten biologischen Teil große Mengen an sog. Überschußschlamm an, der zum größten Teil aus Biomasse besteht. Der Anteil an entstehender Biomasse wird dabei stets groß gehalten, da man durch eine Umsetzung der organischen Inhaltsstoffe in Biomasse eine ausreichende Aufreinigung von Abwässern erzielen will.

Zur Beseitigung der entstandenen erheblichen Mengen an Biomasse gibt es verschiedene bekannte Möglichkeiten, die aber durchwegs sehr kostenintensiv sind. Ein typisches Beispiel für die Beseitigung von Biomasse besteht darin, den die Biomassen enthaltenden Überschußschlamm einem bei erhöhter Temperatur betriebenen Faulturm zuzuführen. In einem solchen Faulturm verweilt der Überschußschlamm mehrere Tage bis Wochen, wobei ein Teil der organischen Inhaltsstoffe zu den gasförmigen Produkten Kohlendioxid und Methan umgesetzt wird. Der Umsatz pro Zeiteinheit sowie die erzeugte Menge an Methan stehen jedoch kostenmäßig in keinem Verhältnis zu den Kosten für den Bau und den Betrieb eines Faulturms. Einem solchen Faulturm muß häufig noch eine Schlammentwässerungsstation nachgeschaltet werden, und ferner ist der anfallende Schlamm häufig hygienisch nicht einwandfrei oder sogar mit Schwermetallen versetzt, so daß er nicht in der Landwirtschaft verwendet, sondern vielmehr auf eine Sondermülldeponie verfrachtet werden muß.

Aus der EP-A-0 0 38 489 ist ein Verfahren der eingangs angegebenen Art bekannt, das zur Gewinnung von proteinhaltigem Tierfutter aus in Wasser gelösten und/oder schwebenden organischen Stoffen dient. Dabei werden diese Stoffe in mindestens zwei hintereinander geschalteten, jeweils ein Belebungsbecken und ein Absetzbecken aufweisenden Stufen biologisch aufbereitet. In der ersten Stufe besteht ein größerer Anteil an Bakterien als an Protozoen. Abwechselnd aus der ersten und zweiten Stufe wird der Schlamm diskontinuierlich abgezogen, einer Entwässerungsvorrichtung zugeführt und ein Teil des entwässerten Schlamms zum Zulauf derjenigen Stufe zurückgeführt der der Schlamm entnommen wurde. Der nicht zurückgeführte Schlamm wird entwässert, homogenisiert und getrocknet, wobei das angestrebte Aufschließen des Proteins und Abtöten der Bakterien erreicht wird.

Da in den verwendeten Belebungsbecken, in denen eine Belüftung erfolgt, durch den Einsatz von Mikroorganismen eine intensive Schlammproduktion erzielt wird, lassen sich auf diese Weise hohe Erträge an stark proteinhaltigem Futter erreichen.

Aufgabe der Erfindung ist es, ein Verfahren der eingangs angegebenen Art so auszubilden, daß eine Überschußschlammbildung in Abwasser- bzw. Abfallbehandlungsanlagen zumindest in einem wesentlichen Ausmaß und vorzugsweise vollständig unterbunden und trotzdem eine gute Abwasserreinigung erzielt wird.

Gelöst wird diese Aufgabe nach der Erfindung im wesentlichen dadurch, daß fakultativ anaerobe Mikroorganismen verwendet werden und daß die Verweilzeiten beider Phasen unabhängig voneinander zeitlich so eingestellt werden und die wasserarme Phase in einem solchen Ausmaß wieder in den weiterhin mit frischem Abfall und/oder Abwasser gespeisten Reaktor rückgeführt wird, daß im Reaktor keine Anreicherung von Biomasse erfolgt.

Überraschenderweise tritt bei der Durchführung des erfindungsgemäßen Verfahrens, für das die unterschiedlichen Verweilzeiten der wasserarmen und wasserreichen Phasen charakteristisch sind, keine Anreicherung von Biomasse im Reaktor auf, und zwar auch dann nicht, wenn die Trennung in eine wasserreiche und in eine wasserarme Phase nach einer bevorzugten Ausgestaltung der Erfindung in einer dem Reaktor nachgeschalteten ersten Trennstufe vorgenommen und die wasserarme Phase zumindest teilweise wieder in den weiterhin mit frischem Abfall und/oder Abwasser gespeisten Reaktor rückgeführt wird.

Mit dem Verfahren nach der Erfindung gelingt es, große Mengen an organischen Inhaltsstoffen zu Kohlendioxid und Wasser abzubauen, wobei das entstehende Abwasser stets einen hohen Reinigungsgrad erreicht. Im günstigsten, jedoch keinesfalls seltenen Fall ist es möglich, die wasserarme Phase vollständig zurückzuführen und dabei im besten Fall die vorhandenen Abfälle vollständig umzusetzen.

Durch die Entkupplung der Verweilzeiten von wasserarmer und wasserreicher Phase in Kombination mit einer möglichst hohen, im Grenzfall vollständigen Rückführung der wasserarmen Phase ergibt sich eine Minimierung der Bildung von Biomasse zugunsten der Stoffwechselleistung der Mikroorganismen, die zu einem überraschend erhöhten Abbau der organischen Inhaltsstoffe führt.
Die jeweils optimalen Verweilzeiten lassen sich ohne Schwierigkeiten insbesondere experimentell bestimmen.

Wenn berücksichtigt wird, daß der Überschußschlamm am gesamten Schlammanfall einer Abwasserbehandlungsanlage über 90 % liegen kann, dann ist ersichtlich, daß die erzielbaren Einsparungen im Bereich der Schlammbehandlung einer Abwasserbehandlungsanlage außerordentlich hoch sind und sogar dann noch von erheblicher wirtschaftlicher Bedeutung sind, wenn nicht der gesamte Überschußschlamm, sondern nur ein Anteil durch das erfindungsgemäße Verfahren abgebaut und in Kohlendioxid und Wasser überführt werden kann.

Besonders vorteilhafte Ausführungsformen der Erfindung sind in den Unteransprüchen angegeben. In den Unteransprüchen ist auch darauf hingewiesen, daß als Mikroorganismen beispielsweise Mischkulturen von Trockenbakterien mit der Bezeichnung "DBC plus" der Firma Flow Laboratories GmbH, Meckenheim verwendet werden können. Diese Mischkulturen haben sehr hohe spezifische Abbauraten für bestimmte organische Verbindungen. Bei den Bakterien, die für "DBC plus"-Mischkulturen Verwendung finden, handelt es sich ausschließlich um ungefährliche Saprophyten, die nur totes organisches Material verwerten. Die hier eingesetzten Bakterienkulturen für die "DBC plus"™ sind fakultativ anaerob, was bedeutet, daß sie einen belüfteten Lebensraum für ihre Lebenstätigkeit bevorzugen, jedoch auch unter anaeroben Bedingungen zu existieren vermögen. Je nach der Art des zu behandelnden Abwassers bzw. Schlammes können folgendes Typen verwendet werden:
DBC plus Typ A;
DBC plus Typ A-2;
DBC plus Typ B;
DBC plus Typ F;
DBC plus Typ H-1;
DBC plus Typ H-2;
DBC plus Typ L und
DBC plus Typ R-5.

Zur Aktivierung dieser als wasserfreie, pulverförmige Substanzen vorliegenden Typen ist die Zugabe von Wasser erforderlich, dessen Temperatur etwa 25 bis 30 °C betragen sollte. Die Konzentration soll bei allen Typen bei etwa 0,5 kg in 8 l Wasser, der pH-Wert zwischen 5,5 und 8,5 liegen und die Aktivierungszeit soll drei bis acht Stunden betragen. Vor der Zuführung zum Belebtschlammbecken sollte bei diesen Typen das Verhältnis von $BSB_5$: Stickstoff: Phosphor kontrolliert und etwa ein Verhältnis von ca. 100:5:1 geschaffen werden. Unter $BSB_5$ wird dabei der biologische Sauerstoffbedarf innerhalb von fünf Tagen verstanden. Die vorstehend angeführten Stämme von Mikroorganismen stellen lediglich nicht einschränkende Beispiele dar.

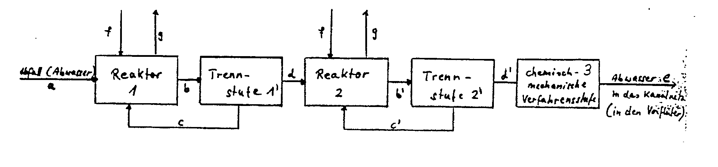

Die Erfindung wird nachfolgend anhand einer Schemazeichnung und verschiedener Ausführungsbeispiele erläutert; die einzige Figur der Zeichnung zeigt ein Blockschema einer Verfahrensführung, wie sie z.B. zum Abbau organischer Inhaltsstoffe in Fettschlämmen verwendet werden könnte.

Bei einer entsprechend der Zeichnung aufgebauten Anlage werden organische Inhaltsstoffe enthaltende Abfälle und/oder Abwässer über eine Zuführung a in einen Reaktor 1 bekannter Bauart eingeleitet und mit geeigneten Mikroorganismen versetzt. Der Reaktorbetrieb erfordert die Zuführung von Sauerstoff, was mit dem Bezugszeichen f angedeutet ist, und es entsteht ein mit dem Bezugszeichen g angedeuteter Austrieb von Kohlendioxid aus dem Reaktionssystem.

Über eine Leitung b ist eine Trennstufe 1' mit dem Reaktor verbunden, in der eine Auftrennung in eine wasserreiche Phase und in eine wasserarme Phase erfolgt. Über eine Rückführleitung c ist es möglich, die wasserarme Phase zurück in den Reaktor 1 zu führen, während demgemäß aus dem Reaktor 1 in die Trennstufe 1' die Reaktionsmischung geleitet wird, erfolgt von der Trennstufe 1' zum Reaktor 1 nur noch eine Rückführung der wasserarmen Phase, wodurch es möglich wird, die Verweilzeiten von wasserarmer Phase und wasserreicher Phase getrennt voneinander vorzugeben.

Auf die Trennstufe 1' folgt in dem dargestellten Beispiel ein weiterer Reaktor 2, dem über eine Leitung d die wasserreiche Phase der Trennstufe 1' zugeführt wird. Im Reaktor 2 spielen sich vergleichbare Vorgänge wie im Reaktor 1 ab, und es wird auch die Reaktionsmischung aus dem Reaktor 2 wiederum über eine Leitung b' einer zweiten Trennstufe 2' zugeführt, die für die in ihr gebildete wasserarme Phase wiederum eine Rückführung zum Reaktor 2 besitzt. Möglich ist es auch, die wasserarme Phase der Trennstufe 2' zumindest teilweise in den Reaktor 1 zurückzuleiten.

Aus der Trennstufe 2' wird über eine Leitung d' die wasserreiche Phase in eine chemisch-mechanische Verfahrensstufe 3 überführt, und das darin gewonnene aufgereinigte Abwasser wird über eine Leitung e in das öffentliche Kanalnetz bzw. in den Vorfluter geleitet.

Mit einer Anlage der beschriebenen Art ist es möglich, die Menge an anfallender Biomasse sehr stark zu reduzieren und gegebenenfalls vollständig zu beseitigen.

Mit dem erfindungsgemäßen Verfahren erzielte praktische Ergebnisse werden anhand der nachfolgend angegebenen Beispiele erläutert.

Beispiel 1:

Verminderung von Abfallstoffen mit organischen Inhaltstoffen bei einer Abwasserbehandlung.

Eine Kläranlage mit einem Ausbau auf 15 000 EWG (Einwohnergleichwert) wurde sechs Monate entsprechend dem erfindungsgemäßen Verfahren betrieben. Als Mikroorganismen wurde DBC plus Typ A der Firma Flow Laboratories GmbH verwendet, und zwar in einer Menge von 660 g pro Tag. Der pH-Wert betrug 7 bis 8, der Wert von $PO_2$ etwa 0,5 bis 2,5 ppm. Die Verweilzeit Belebungsbecken betrug etwa 10 Stunden.

Bei der erwähnten Anlage ist es zulässig, 0,94 kg Biotrockenmasse pro Kilogramm $BSB_5$ zu bilden. Erfahrungsgemäß liegt die tatsächlich gebildete Biotrockenmasse bei 50 %. Das bedeutet für diese Anlage bei einem Trockenwetterzufluß von 2000 $m^3$/Tag eine Trockenmassebildung von ca. 188 kg/Tag. Der Trockensubstanzgehalt in der Belebung liegt bei 2.5 bis 3,0 kg/$m^3$. Das bedeutet, daß pro Tag bis zu 75 $m^3$ Schlamm/Wasser-Gemisch aus der Belebung bearbeitet werden muß.

Während des Zeitraums von sechs Monaten, in dem die Kläranlage nach dem erfindungsgemäßen Verfahren betrieben wurde, fiel im Belebungsteil der Kläranlage kein Überschußschlamm an, und zwar trotz des $BSB_5$-Abbaus von 0,200 kg/$m^3$.

Beispiel 2:

Einstufiges Verfahren zum Abbau der organischen Inhaltstoffe aus einer Abfall-Bohrölemulsion.

In einem einstufigen erfindungsgemäßen Chargenbetrieb wurde einer Bohrölemulsion mit einem pH-Wert von 7 bis 8, einer Temperatur von ca. 35 °C und einem $PO_2$-Wert von maximal 2,0 ppm DBC plus Typ R-5 in einer Menge von 80 g pro $m^3$ beigegeben. Die Verweilzeit betrug ca. 72 Stunden.

Die CSB-Belastung lag zu Beginn des Versuchs bei 28600, der Mineralölanteil über 200 ppm. Nach Durchführung des Verfahrens nach der Erfindung war der CSB-Wert auf 2700 vermindert, was einer Reduzierung um über 90 % entspricht. Der Mineralölanteil war auf 6 ppm gesunken. Sämtliche Anlagenwerte lagen unter den Grenzwerten, die für die Einleitung ins öffentliche Kanalnetz zulässig sind. Die gebildete Biomasse wurde jeweils zur Bearbeitung der nächsten Charge in die Reaktion zurückgeführt.

Dieser durch die Erfindung erreichten Vorteile steht als praktische Alternative die Durchführung einer Ultrafiltration zur Trennung von Wasser und Mineralöl mit einer anschließenden abwassertechnischen Behandlung des Wassers und einer Verbrennung des Öls gegenüber. Es ist offensichtlich, daß dadurch, daß durch den Einsatz des erfindungsgemäßen Verfahrens die Ultrafiltration und die Verbrennung entfallen, sowohl hohe Kosten als auch eine Belastung der Luft mit Verbrennungsschadstoffen vermieden werden kann.

Beispiel 3:

Abbau von organischen Inhaltstoffen in Fettschlämmen.

Mit Fettschlämmen aus Fettabscheidern wurde nach der Erfindung ein dreistufiger kontinuierlicher Betrieb durchgeführt, wobei als Mikroorganismus DBC plus Typ A in einer Menge von 80 g pro $m^3$ verwendet wurde. Die Temperatur betrug ca. 35 °C, der $PO_2$-Wert maximal 2,0 ppm. Als hydraulische Verweilzeit, d.h. als Verweilzeit für die wasserreiche Phase wurden 96 Stunden gewählt.

Der Feststoffanteil lag bei ca. 70 kg/$m^3$, der CSB-Wert bei ca. 150000.

In der wasserreichen Phase am Ausgang der dritten Trennstufe war nach Durchführung des Verfahrens nach der Erfindung kein nennenswerter Feststoffgehalt mehr vorhanden, und der CSB-Wert belief sich auf 12900, d.h. es ergab sich eine CSB-Reduzierung um über 90 % und eine vollständige Feststoffeliminierung.

**Patentansprüche**

1. Verfahren zur Reduzierung organischer Inhaltsstoffe in Abfällen und/oder Abwässern, bei dem den in einen Reaktor eingebrachten Abfällen und/oder Abwässern Mikroorganismen, insbesondere spezialisierte Hochleistungsstämme, in einer von der organischen Belastung abhängigen Menge beigegeben werden, und die Abfälle und/oder Abwässer in eine wasserreiche Phase und eine wasserarme Phase getrennt werden,

dadurch **gekennzeichnet,**

daß fakultativ anaerobe Mikroorganismen verwendet werden und daß die Verweilzeiten bei der Phasen unabhängig voneinander zeitlich so eingestellt werden und die wasserarme Phase zumindest teilweise und in einem solchen Ausmaß wieder in den weiterhin mit frischem Abfall und/oder Abwasser gespeisten Reaktor rückgeführt wird, daß im Reaktor keine Anreicherung von Biomasse erfolgt.

2. Verfahren nach Anspruch 1, dadurch **gekennzeichnet**, daß die Trennung in eine wasserreiche und in eine wasserarme Phase in einer dem Reaktor nachgeschalteten ersten Trennstufe vorgenommen und die wasserarme Phase zumindest teilweise wieder in den weiterhin mit frischem Abfall und/oder Abwasser gespeisten Reaktor rückgeführt wird.

3. Verfahren nach Anspruch 2, dadurch **gekennzeichnet**, daß die in der ersten Trennstufe erhaltene wasserreiche Phase einem weiteren Reaktor mit nachgeschalteter zweiter Trennstufe zugeführt wird, und daß die in dieser zweiten Trennstufe gebildete wasserarme Phase zumindest teilweise in den zweiten und/oder ersten Reaktor zurückgeführt wird.

4. Verfahren nach einem der vorhergehenden Ansprüche, dadurch **gekennzeichnet**, daß die Rückführung der wasserarmen Phase kontinuierlich vorgenommen wird.

5. Verfahren nach einem der Ansprüche 1 bis 3, dadurch **gekennzeichnet**, daß die Rückführung der wasserarmen Phase in Abhängigkeit vom Füllungsgrad zumindest eines der der jeweiligen Trennstufe vorgeschalteten Reaktoren diskontinuierlich vorgenommen wird.

6. Verfahren nach einem der vorhergehenden Ansprüche, dadurch **gekennzeichnet**, daß in aufeinanderfolgenden Reaktoren Mikroorganismen von unterschiedlicher Art und/oder Zusammensetzung beigegeben werden.

7. Verfahren nach einem der vorhergehenden Ansprüche, dadurch **gekennzeichnet**, daß neben der getrennten Einstellung der Verweilzeiten von wasserreicher und wasserarmer Phase in den Reaktoren eine in Abhängigkeit von den beigegebenen Mikroorganismen erfolgende Einstellung des pH-Wertes sowie gegebenenfalls der Temperatur und des $PO_2$-Wertes vorgenommen wird.

8. Verfahren nach einem der vorhergehenden Ansprüche, dadurch **gekennzeichnet**, daß die wasserreiche Phase vor ihrer Einleitung in einen Vorfluter oder in ein Kanalnetz durch eine chemisch-mechanische Klärstufe geführt wird.

9. Verfahren nach einem der vorhergehenden Ansprüche, dadurch **gekennzeichnet**, daß als Mikroorganismen Mischkulturen von Trockenbakterien mit der Bezeichnung DBC plusTM - (Flow Laboratories GmbH, Meckenheim) verwendet werden.

## Claims

1. Method for the reduction of the content of organic compounds in refuse and/or waste water, in which microorganisms are added to the refuse and/or waste water introduced into a reactor, in particular specialised high performance strains, in a quantity depending on the organic burden, and the refuse and/or the waste water are separated into a water-rich phase and a water-poor phase, characterised in that optionally anaerobic microorganisms are used; and in that the retention times of the two phases is adjusted timewise independently from each other and the water-poor phase is at least partly returned into the reactor which continues to be supplied with fresh refuse and/or fresh waste water, the adjustment of the retention times and the quantity of returned water-poor phase being such that no enrichment of the biomass occurs in the reactor.

2. Method in accordance with claim 1, characterised in that the separation into a water-rich and a water-poor phase is carried out in a first separator stage located downstream of the reactor and the water-poor phase is at least partly returned to the reactor which continues to be supplied with fresh refuse and/or waste water.

3. Method in accordance with claim 2, characterised in that the water-rich phase obtained in the first separation stage is supplied to a further reactor having a second separator stage downstream thereof; and in that the water-poor phase obtained in this second separator stage is at least partly returned to the first and/or the second reactor.

4. Method in accordance with one of the preceding claims, characterised in that the return of the water-poor phase occurs continuously.

5. Method in accordance with one of claims 1 to 3, characterised in that the return of the water-poor phase occurs discontinuously in dependence on the filling degree of at least one of the reactors placed upstream of the respective separator stage.

6. Method in accordance with one of the preceding claims, characterised in that microorganisms of different kinds and/or different compositions are added in successive reactors.

7. Method in accordance with one of the preceding claims, characterised in that, in addition to the adjustment of the retention times of the water-poor and water-rich phases in the reactors, an adjustment of the pH value, and optionally of the temperature and the $PO_2$ value, is effected in dependence on the added microorganisms.

8. Method in accordance with one of the preceding claims, characterised in that the water-rich phase is led through a chemical-mechanical clarification stage before being introduced into a collector or a tube network.

9. Method in accordance with one of the preceding claims, characterised in that mixed cultures of dry bacteria designated by DBC plus (TM of Flow Laboratories GmbH, Meckenheim) are used as microorganisms.

**Revendications**

1. Procédé pour la réduction de la teneur en composés organiques dans les déchets et/ou dans les eaux usées, dans lequel on ajoute aux déchets et/ou aux eaux usées mis dans un réacteur des microorganismes, en particulier des souches spécialisées à haut rendement, dans une quantité dépendant de la charge organique, et l'on sépare les déchets et/ou les eaux usées en une phase riche en eau et une phase pauvre en eau, caractérisé en ce que l'on emploie des microorganismes facultativement anaérobies et en ce que l'on règle les temps de séjour des deux phases indépendamment l'une de l'autre dans le temps et en ce l'on retourne au moins partiellement la phase pauvre en eau dans le réacteur qui continue à être alimenté en nouveaux déchets et/ou nouvelles eaux usées, le réglage des temps de séjour et la quantité retournée de phase pauvre en eau étant tels qu'il ne se produit aucun enrichissement de biomasse dans le réacteur.

2. Procédé selon la revendication 1, caractérisé en ce que la séparation entre une phase riche en eau et une phase pauvre en eau est effectuée dans un premier étage de séparation prévu en aval du réacteur et en ce que la phase pauvre en eau est retournée au moins partiellement dans le réacteur qui continue à être alimenté en nouveaux déchets et/ou nouvelles eaux usées.

3. Procédé selon la revendication 2, caractérisé en ce que la phase riche en eau obtenue dans le premier étage de séparation est fournie à un autre réacteur muni d'un second étage de séparation en aval, et en ce que la phase pauvre en eau formée dans ce second étage de séparation est retournée au moins partiellement dans le second et/ou le premier réacteur.

4. Procédé selon l'une des revendications précédentes, caractérisé en ce que le retour de la phase pauvre en eau est effectué en continu.

5. Procédé selon l'une des revendications 1 à 3, caractérisé en ce que le retour de la phase pauvre en eau est effectué de façon discontinue en fonction du degré de remplissage de l'un au moins des réacteurs situés en amont de l'étage de séparation respectif.

6. Procédé selon l'une des revendications précédentes, caractérisé en ce que l'on ajoute des microorganismes de type ou de composition différents dans les réacteurs successifs.

7. Procédé selon l'une des revendications précédentes, caractérisé en ce que, outre le réglage séparé des temps de séjour des phases riche et pauvre en eau dans les réacteurs, l'on effectue un réglage de la valeur du pH et éventuellement de la température et de la valeur du PO2 en fonction des microorganismes ajoutés.

8. Procédé selon l'une des revendications précédentes, caractérisé en ce que la phase riche en eau est conduite dans un étage d'épuration chimio-mécanique avant d'être rejetée dans un collecteur ou un réseau de canalisations.

9. Procédé selon l'une des revendications précédentes, caractérisé en ce que l'on utilise comme microorganismes des cultures mixtes de bactéries sèches portant la désignation DBC plus (Marque déposée des Flow Laboratories GmbH, Meckenheim).